# EUROPEAN PATENT APPLICATION

(11) **EP 1 672 393 A1**
(43) Date of publication of application: **21.06.2006**
(21) Application number: 05027384.6
(22) Date of filing: 14.12.2005
(51) Int. Cl.: G02B 3/00, B29D 11/00

(54) **Microlens array sheet and method for manufacturing the same**

(30) Priority: 14.12.2004 KR 2004105873
(71) Applicant: LG Electronics, Inc., 151-721 seoul (KR); LG Micron Ltd., Gyeongsangbuk-do, 730-400 (KR)
(72) Inventor: Oh, Chang-Hoon, Seongbuk-gu Seoul 136-837 (KR); Kwon, Hyouk, Doosan Apt 107-2001, Gwanak-gu Seoul 151-782 (KR); Lim, Tae-Sun, Suwon-si Gyeonggi-do 441-704 (KR); Yee, Young-Joo, Bundang-gu Seongnam Gyeonggi-do (KR); Park, Ki-Won, Dongan-gu Anyang-si Gyeonggi-do 431-050 (KR); Seong, Dong-Mug, Danwon-gu Ansan-si Gyeonggi-do 425-881 (KR); Lee, Gun-Woo, Dalseo-gu Daegu 704-814 (KR)
(74) Representative: von Hellfeld, Axel

(57) **Abstract**

Disclosed herein are a microlens array sheet using micro machining and a method for manufacturing the same. The microlens array sheet comprises a microlens array having a convex and concave surface including curved portions and boundary grooves formed between respective neighboring microlenses via laser micro machining, and a void filler layer stacked on the microlens array. The microlens array sheet can be manufactured with a reduced number of process steps using laser micro machining, whereby improved productivity as compared to a conventional sequential semiconductor process can be accomplished. Using the laser micro machining, also, enables the manufacture of a desired three-dimensional micro shape. Therefore, the microlens array sheet is applicable as an optical sheet of a display system requiring a delicate surface shape.

## Description

### BACKGROUND OF THE INVENTION

### Field of the Invention

The present invention relates to a microlens array sheet and a method for manufacturing the same.

### Description of the Related Art

As well known, laser micro machining has several advantages in that it can manufacture complicated three-dimensional structures in a more simplified manner as compared with using conventional semiconductor processing, and that it requires relatively simple equipment. Therefore, laser micro machining has attracted a lot of attention. Moreover, the laser micro machining can process various materials, such as for example, ceramics, metals, and polymers, in addition to semiconductor materials.

A representative example of three-dimensional structure manufacturing methods using laser includes a deposition process for inducing a local deposition at an irradiation position of a laser beam to enable a deposited object to have a three-dimensional structure, an etching process for gradually etching an object immersed in an etching liquid or gas by irradiating the object at a desired etching location with a laser beam, or an optical molding process for irradiating a photopolymer solution, which cures when exposed to light, with a laser beam.

Three-dimensional structures, which can be manufactured by laser micro machining, mainly have a combined shape of both linear and curved structures, and therefore, precise linear translation and rotation transfer thereof are essential for accomplishing a delicate processing. The linear translation transfer can achieve a repetition accuracy of approximately 0.1mm, and the rotation transfer can achieve an angular resolution of 50mrad.

Generally, semiconductor devices, optical devices, liquid crystal display devices, micro-electro-mechanical system (MEMS) devices, etc. are manufactured by sequential semiconductor processes. In the sequential semiconductor processes, a photolithography process using a mask or reticle, which is formed with a predetermined pattern, is performed, and subsequently, an etching process for selectively removing an exposed region is repeatedly performed. However, the mask or reticle used in the sequential semiconductor processes has a fixed pattern, and therefore, must be exchanged with a new one in accordance with the change of a desired pattern. This inevitably results in an increase in production costs and time. For this reason, when devices, having short development period and product life, are manufactured via the sequential semiconductor processes, there exist problems, for example, an increase in the manufacturing price of products, and a difficulty in the rapid development of new products. Furthermore, when a pattern is manufactured via a photo-exposure process, it is difficult to achieve a micro pattern less than a predetermined level due to a limit of an optical source.

The recent advance of laser micro machining enables the processing of a complicated three-dimensional micro structure. Laser micro machining includes several advantages in that a three dimensional micro structure can be obtained by only one process, that the manufacture of the mask or reticle is unnecessary, and that an efficient response to a micro pattern is possible since it uses a laser beam having a shorter wavelength than semiconductor exposure equipment. In particular, the laser micro machining can achieve a large area micro pattern by use of a laser control device for optimizing a beam profile and a high-precision stage drive unit for improving the quality of a formed pattern. However, in the case of patterns manufactured by the laser micro machining, the boundary region of the patterns cannot have a vertical cross section. This is due to optical loss in the boundary region of the patterns when the patterns are applied to an optical sheet of a display system.

### SUMMARY OF THE INVENTION

Therefore, the present invention has been made in view of the above problems, and it is an object of the present invention to provide a microlens array sheet and a method for manufacturing the same, wherein no optical loss is generated when the microlens array sheet is manufactured, whereby an improved optical efficiency can be accomplished and a viewing angle of microlenses can be controlled.

In accordance with an aspect of the present invention, the above and other objects can be accomplished by the provision of a microlens array sheet comprising: a microlens array having a convex and concave surface including curved portions and boundary grooves formed between respective neighboring microlenses; and a void filler layer stacked on the microlens array.

Preferably, the microlenses, constituting the microlens array, may be formed of a kind of lenses selected from among lenticular lenses, polygonal lenses including honeycomb shaped lenses, and circular or elliptical lenses.

Preferably, the microlenses, constituting the microlens array, may be organic or nonorganic matter having a light transmissibility.

Preferably, the microlenses, constituting the microlens array, may be adjustable in viewing angle via an adjustment in the depth of the boundary grooves.

In accordance with an aspect of the present invention, the above and other objects can be accomplished by the provision of a method for manufacturing a microlens array sheet using micro machining comprising the steps of: a) forming a microlens array having a convex and concave surface including curved portions and boundary grooves formed between respective neighboring microlenses via laser micro machining; and b) forming a void filler layer on the microlens array.

Preferably, the step b) for forming the void filler layer may use a method selected from among electrolytic plating, electroless plating, sputtering, sublimation/deposition, chemical vapor deposition, and spin/spray coating methods.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a sectional view of a conventional microlens array sheet; and
FIG. 2 is a sectional view of a microlens array sheet using micro machining according to an embodiment of the present invention.
FIG. 3 is a flowchart for manufacturing method of a microlens array sheet using micro machining according to an embodiment of the present invention.

### DESCRIPTION OF THE PREFERRED EMBODIMENTS

Now, a preferred embodiment of the present invention will be explained with reference to the accompanying drawing. In the following description, a detailed description of known functions and configurations incorporated herein will be omitted when it may make the subject matter of the present invention rather unclear.

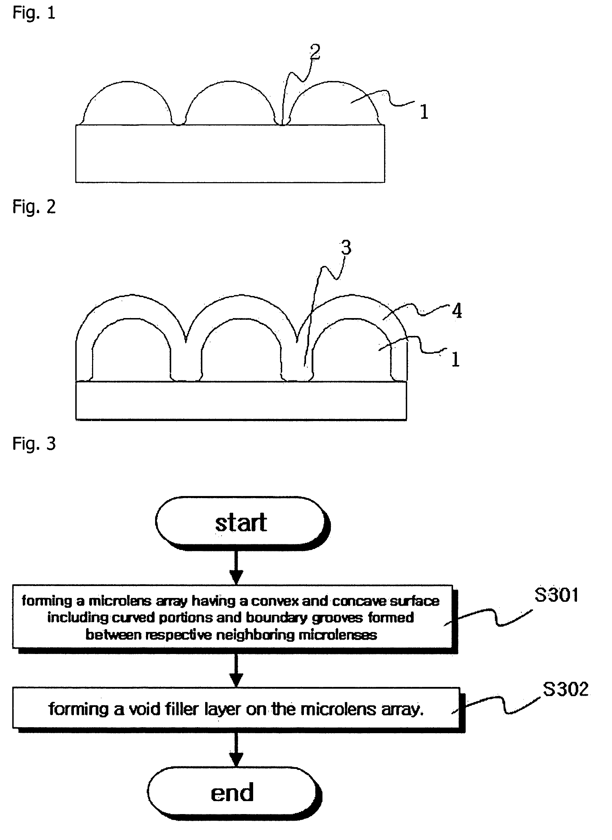

FIG. 2 is a sectional view of a microlens array sheet using micro machining according to an embodiment of the present invention.

In the embodiment of the present invention, the microlens array sheet includes a microlens array 1, and a void filler layer 4.

The embodiment of the present invention schematically exemplifies a method for forming one or more boundary grooves 3 in the microlens array 1.

Referring to FIG. 2, the boundary grooves 3 are formed in the microlens array 1 in a laser micro machining step of the microlens array 1, in order to minimize optical loss in the boundary regions between respective neighboring microlenses, which is an adverse effect of laser micro machining. Providing the void filler layer 4 as well as the boundary grooves 3 has the effect of maximizing an optical efficiency.

The microlens array 1 contains a plurality of microlenses and laser micro machining is performed between the respective neighboring microlenses, such that the microlens array 1 has a convex and concave surface including dome-like curved portions.

Preferably, the microlenses take the form of planar convex lenses. More preferably, the microlenses are configured such that horizontal and vertical curvatures thereof are different from each other, in order to ensure a light emitting angle can be variably controlled in accordance with direction and orientation, and the microlens array 1 has a hexagonal honeycomb shape, rhombic diamond shape, rectangular and triangular shapes. The microlenses are arranged on a substrate close to one another by little or no distance therebetween. Such an approximately 100% filling rate has the effect of maximizing an optical efficiency. In the present invention, after forming the microlenses and voids between the respective microlenses via laser micro machining, the void filler layer 4 is added, whereby the 100% filling rate can be achieved. Meanwhile, the microlenses may be arranged on the substrate such that the edges of the microlenses overlap with one another. In this case, it is preferable that interfaces of the microlenses, which overlap with one another at their edges, have a cross section having a certain curvature. The cross sectional shape of the microlenses is a factor of determining an optical property. In accordance with use purposes, the microlenses may have a spherical or non-spherical cross sectional shape.

Preferably, each of the microlenses has a light emitting angle of more than 30 degrees in a horizontal axis, and a light emitting angle of more than 10 degrees in a vertical axis, relative to a normal line of a lens plane. The light emitting angles are determined to obtain half a front-side gain value.

The substrate, which serves as a base required for lens forming, is preferably made of a polymer material. More particularly, the substrate is made of polyester. In conclusion, the material of the substrate serving as a base, and resin used to form the microlenses array, preferably, have a high transmissibility and an index of refraction of more than 1.5.

The microlenses are planar-convex lenses having a spherical or non-spherical cross sectional shape as stated above. The microlens array is formed as a plurality of elliptical, hexagonal, or quadrilateral unit microlenses are arranged in a two dimensional plane. The size of unit microlenses is determined such that the unit microlenses are arranged by a pitch of approximately 1500 or less. The pitch value is obtained in consideration of the prevention of moiré.

As stated above, the microlenses are characterized in that the vertical and horizontal curvatures thereof are different from each other for the regulation of the light emitting angles. The curvatures of the microlenses are determined based on the vertical and horizontal lengths of the microlenses, the sag of the microlenses, and constants of the respective non-spherical surfaces.

The void filler layer 4 is formed on the microlens array 1.

The void filler layer 4 may be formed via conventional thin-layer forming methods. In one example, the void filler layer 4 may be formed via an electrolytic plating or electroless plating method. In another example, the void filler layer 4 may be formed via a sputtering or sublimation/deposition method. In yet another example, the void filler layer 4 may be formed via a chemical vapor deposition, or spin or spray coating method.

The above described microlens array sheet manufacturing method is suitable for mass production, and is usable for the manufacture of an original mold required for mass production. That is, the microlens array sheet, manufactured via the above-described method, can be used as a mold for the manufacture of a master. Accordingly, a massive amount of microlens array sheets having the same structure as each other can be reproduced by master reproduction and injection molding methods using the original microlens array sheet.

As is apparent from the above description, the present invention can manufacture a microlens array sheet with a reduced number of process steps using laser micro machining, whereby improved productivity as compared to a conventional sequential semiconductor process can be accomplished. Using the laser micro machining, also, enables the manufacture of a desired three-dimensional micro shape. Therefore, the present invention is applicable as an optical sheet of a display system requiring a delicate surface shape.

FIG. 3 is a flowchart for manufacturing method of a microlens array sheet using micro machining according to an embodiment of the present invention.

Referring Fig. 3, A method for manufacturing a microlens array sheet using micro machining comprise steps of forming a microlens array having a convex and concave surface including curved portions and boundary grooves formed between respective neighboring microlenses(S301); and forming a void filler layer on the microlens array(S302). The detail explanation of each step is abridged because each step has same procedure described above.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A microlens array sheet comprising:
a microlens array having a convex and concave surface including curved portions and boundary grooves formed between respective neighboring microlenses; and
a void filler layer stacked on the microlens array.

2. The microlens array sheet as set forth in claim 1, wherein the microlenses, constituting the microlens array, are formed of a kind of lenses selected from among lenticular lenses, polygonal lenses including honeycomb shaped lenses, and circular or elliptical lenses.

3. The microlens array sheet as set forth in claim 1, wherein the microlenses, constituting the microlens array, take form of planar convex lenses.

4. The microlens array sheet as set forth in claim 1, wherein the microlenses, constituting the microlens array, are configured such that horizontal and vertical curvatures thereof are different from each other.

5. The microlens array sheet as set forth in claim 1, wherein the microlenses, constituting the microlens array, are arranged on a substrate close to one another by little or no distance therebetween.

6. The microlens array sheet as set forth in claim 1, wherein the microlenses, constituting the microlens array, are arranged on the substrate such that the edge of the microlenses overlap with one another.

7. The microlens array sheet as set forth in claim 1, wherein the microlenses, constituting the microlens array, have a spherical or non-spherical cross sectional shape.

8. The microlens array sheet as set forth in claim 1, wherein the microlenses, constituting the microlens array, has a light emitting angle of more than 30 degrees in horizontal axis relative to a normal line of a lens plane.

9. The microlens array sheet as set forth in claim 1, wherein the microlenses, constituting the microlens array, has a light emitting angle of more than 10 degrees in vertical axis relative to a normal line of a lens plane.

10. The microlens array sheet as set forth in claim 1, wherein the microlenses, constituting the microlens array, are arranged by a pitch of approximately 150 _{µ}m or less.

11. A method for manufacturing a microlens array sheet using micro machining comprising the steps of:
a) forming a microlens array having a convex and concave surface including curved portions and boundary grooves formed between respective neighboring microlenses; and
b) forming a void filler layer on the microlens array.

12. The method as set forth in claim 11, wherein the step b) for forming the void filler layer uses an electrolytic plating or electroless plating method.

13. The method as set forth in claim 11, wherein the step b) for forming the void filler layer uses a sputtering or sublimation/deposition method.

14. The method as set forth in claim 11, wherein the step b) for forming the void filler layer uses a chemical vapor deposition method.

15. The method as set forth in claim 11, wherein the step b) for forming the void filler layer uses a spin or spray coating method.

16. A master for use in the reproduction of a microlens array sheet comprising a microlens array having a convex and concave surface including curved portions and boundary grooves formed between respective neighboring microlenses via laser micro machining, and a void filler layer stacked on the microlens array.
